# EUROPEAN PATENT SPECIFICATION

(11) **EP 4 615 276 B1**
(45) Date of publication and mention of the grant of the patent: **29.04.2026**
(21) Application number: 23801465.8
(22) Date of filing: 09.11.2023
(51) Int. Cl.: A47B 47/02, F16B 12/40

(54) **FURNITURE STRUCTURE MADE FROM METAL**
MÖBELSTRUKTUR AUS METALL
STRUCTURE DE MEUBLE EN MÉTAL

(30) Priority: 11.11.2022 EP 22206949
(43) Date of publication of application: 17.09.2025
(73) Proprietor: Pintur, Mladen, 10000 Zagreb (HR)
(72) Inventor: Pintur, Mladen, 10000 Zagreb (HR)
(74) Representative: Fink Numrich Patentanwälte PartmbB
(86) International application number: PCT/EP2023/081328
(87) International publication number: WO 2024/100204

(56) References cited:
- EP-A2- 1 050 244
- CH-A- 396 345
- JP-A- 2005 121 142

## Description

The present invention relates to a load-bearing metal structure, in particular a furniture structure made from metal. The furniture structure made from metal comprises tubes and connecting elements for connecting the tubes, thereby forming a grid-like metal structure.

Known shelf systems which are used in the industrial sector or in the residential sector, comprise struts or profile tubes, which are fastened by suitable fastening measures, preferably by means of screws. It is thus possible to assemble horizontally and vertically running profiles to form a shelf system. The horizontal profiles can be support for shelves that can be inserted. Primarily, in such shelf systems technical requirements, such as stability and adaptability, must be given.

DE 20 2021 100 626 U1 discloses a shelf system with struts and plug-in pins for connecting the struts. At least one of the plug-in pins is arranged on a first strut forming a supporting strut and is aligned perpendicularly to the longitudinal axis of the strut. At least one second strut is designed as a hollow strut. The plug-in pin is inserted into the end face of the second strut. The plug-in pin is screwed to the supporting strut via a threaded pin. The threaded pin is screwed both into an internal thread in the plug-in pin and into a thread in the supporting strut. The second strut is connected to a third strut in the edge region of its end face in one piece or by welding. The second and the third struts are at right angles to one another. The shelf system as described above thus needs a plurality of different manufacturing steps and technologies. In particular, the shelf system makes use of U-shaped components which form a frame having three struts. The welding areas or bending areas have to be reworked in order to achieve a visually perfect surface

CH 396 345 A discloses a load-bearing metal structure, comprising hollow base tubes and hollow connecting tubes made from metal and connecting elements for connecting the base tubes and the connecting tubes thereby forming a grid-like metal structure. Connecting elements comprise a pin having a cone shape, the base of which is attached to the base tube and the top of which is inserted into the hollow connecting tube to form a frictional joint to the connecting tube.

JP 2005 121 142 A discloses a joint member for lattice components composed of aluminum hollow extruded members which has a truncated conical shape made out of a synthetic resin, hard rubber, soft metal and the like. A screw part is buried in the joint member and integrally therewith mounted on a shaft center of a conical bottom part of the truncated conical joint member in a projected state. The screw part is engaged with a threaded hole formed on a joint part of the rod-shaped lattice component to mount the truncated conical joint member. A hollow part of the lattice component composed of the aluminum hollow extruded member is fitted to the mounted joint member, and pressed and fastened.

DE 20 2012 003 663 U1 discloses a shelf system comprising tubes and threaded nodes, where a LED lamp is inserted into an elongated partial groove of at least one tube. The power supply to the LED lamp takes place within the tube. To connect the shelf to one or more current-carrying conductors, a socket may be screwed into a thread of one of the threaded nodes.

It is an object of the present invention to provide a load-bearing metal structure, in particular a furniture structure made from metal, which is easier in manufacturing and provides flexibility with respect to its intended use. In addition, an attractive visual appearance shall be provided.

The object is solved by a load-bearing metal structure in form of a furniture structure made from metal according to the features of claim 1. Preferred embodiments are set out in the dependent claims.

The load-bearing metal structure in form of a furniture structure made from metal comprises hollow base tubes made from metal, hollow connecting tubes made from metal, and connecting elements for connecting the base tubes and the connecting tubes, thereby forming a grid-like metal structure. The furniture structure made from metal may be used as a shelf system for displaying items, tables or any other structures extending in all three directions in space. The cross section of the base tubes and the connecting tubes may be square, rectangular or round. Within one furniture structure, the same cross-section is used for the base tubes and the connecting tubes. The base tubes may extend in a first direction, while the connecting tubes extend in at least one second direction being perpendicular to the first direction. The first direction of the base tubes may be a vertical direction. In this case, the connecting tubes extend in one or two horizontal directions (second direction(s)) at right angles to the first direction and to each other. Alternatively, the first direction of the base tubes may be a horizontal direction. In that case, the connecting tubes extend in a plane being perpendicular to the longitudinal axis of the base tube in a horizontal direction and/or in vertical direction (second direction(s)).

The at least one connecting element extends in a direction which is perpendicular to the longitudinal axis of the base tube in order to connect a base tube and a connecting tube. The at least one connecting element may also extend in a direction which is aligned with the longitudinal axis of the base tube to connect two succeeding base tubes.

Thus, the height, length and width of the furniture structure can be set according to the number of connected base tubes and/or connecting tubes. The connecting elements may be arranged at the end(s) of each base tube. In addition, the connecting elements may be arranged in a given distance to the end(s) of a respective base tube. According to the latter, the length of the base tube can define the height, length or width of the furniture structure.

At least one connecting element comprises a (plug-in) pin having the shape of a frustum of a cone. Preferably, the pin is made of metal, such as aluminum or an aluminum alloy. The base of the pin and the frustum of a cone, respectively, is attached to the base tube. The top of the pin and the frustum of a cone, respectively, is (fully) inserted into the hollow connecting tube to form a frictional joint to the connecting tube. The force required to disassemble the joint is the same than the force required to assemble the elements, i.e. the connecting tube and the pin.

Thus, a detachable structure with exchangeable elements is provided. It can be assembled in a simple manner, as the tubes can by connected by hand by placing the components together. As an advantage, the furniture structure can be assembled without any installation tools. The tubes can be assembled and disassembled in all three directions in space using the connecting elements. This disassembly may be done by a strong impact, for example using a rubber hammer, in the opposite direction of the assembling direction.

On the other hand, the load-bearing structure is flexible and expendable in size, in any direction. In principle, any number of tubes can be connected using the connecting elements. The connection may be made between two tubes arranged in a vertical plane or a horizontal plane, each having a right angle to each other. In addition, the connection may be made between two tubes succeeding each other in one direction. If necessary, an existing load-bearing structure can be subsequently extended.

As a further advantage, an appealing design can be achieved. Since the connecting elements protrude into the end face of an adjacent connecting tube, the connecting elements are not visible from the outside in the fully assembled load-bearing structure. In terms of visual appearance, the load-bearing structure consists exclusively of the tubes which are arranged horizontally and vertically. In the connecting areas of adjacent tubes, no externally recognizable connection component is visible from the outside. Accordingly, the load-bearing structure has a slim and tidy appearance.

According to a preferred embodiment, the pin is joined to an insert having an opening that corresponds to the shape of the pin, where the insert is firmly fixed inside the hollow connecting tube. The insert is preferably made from insulating material. For example, the insert is made from hard plastic. The opening of the insert corresponds to the pin, i.e. to the shape of the frustum of a cone. Thus, the firm fixation of the pin inside the insert is guaranteed. As the insert is firmly fixed inside the hollow connecting tube, the fixation of the connecting element to the connecting tube is realized. Due to this fixation and the friction between the surface of the pin and the insert, a great force is required for disassembly which requires a tool, such as a rubber hammer.

According to a further preferred embodiment, the pin is tightly clamped to the base tube by a clamping screw, protruding through a hole in the base tube, and a clamping nut inside the base tube. The clamping screw and the clamping nut inside the base tube provide a strong fixation of the pin to the base tube.

Preferably, the clamping nut is held in a recess of a positioning element located inside the base tube in an area behind the hole. The positioning element has a shape which corresponds to the shape of the inner walls of the base tube to ensure that there is a firm fixation within the base tube. The shape of the recess of the positioning element corresponds to the shape of the outer circumference of the clamping nut. Preferably, the recess and the clamping nut are in the form of a rectangle or square. thus, any rotation of the clamping nut within the recess of the positioning element can be prohibited.

According to a further preferred embodiment, the positioning element has a plurality of recesses for respective clamping nuts. The number of recesses of the position element may be one, two, three, four or five. Irrespective of the number of pins at a specific position of the tube, the position element can be the same for all installation situations.

According to a further preferred embodiment, one of a conducting tile or an insulating tile is arranged between the base of the pin and the base tube, where the outer edges of the conducting tile and the insulating tile fit firmly to the inner wall of the connecting tube in order to provide or prevent an electrical connection between the base tube and the connecting tube. The conducting tile is made from metal, for example ZnAl. The insulating tile is made from plastic. Using either a conducting tile or an insulating tile enables providing a metal structure with cordless low voltage electricity distribution. The electricity is transmitted by the metal structure itself. Poles of different polarity (+ and -) can be connected in any position on the metal structure. In this way, electricity can be obtained to power a consumer, such as lighting, in any position on the metal structure without the use of cables.

According to a further preferred embodiment, the insulating tile has a (thin) wall extending parallel to the longitudinal axis of the base tube (or perpendicular to the longitudinal axis of the connecting tube and the pint, respectively) and being arranged between the base tube and an end face of the connecting tube. The wall ensures that an electrical connection between the base tube and the connecting tube is securely prevented. The thickness of the wall is much smaller than the length of the pin. For example, the thickness of the wall may be 0.5mm or 1.0mm or less.

In a further preferred embodiment, each of the conducting tile and the insulating tile has a circular recess for centering the base of the pin. The circular recess is arranged on that side of the conducting tile and the insulating tile, respectively, which is oriented toward the end face of the connecting tube. The circular recess enables easy assembling of the connecting element.

In a further preferred embodiment, each of the conducting tile and the insulating tile has a protrusion with parallel sides and a through hole for the clamping screw. The protrusion is arranged on the opposite side of the circular recess for centering the base of the pin. The shape of the protrusion corresponds to the above mentioned hole of the base tube, where the protrusion protrudes in the hole of the base tube when the pin is clamped to the base tube by the clamping screw. On the one hand, assembling is made easier. On the other hand, the protrusion having parallel sides which protrudes in the hole being a longitudinal hole prevents the rotation of the conducting tile and the insulating tile, respectively, during assembly. Further, the connecting tube fits firmly with the walls of the outer edges of the respective conducting tile and insulating tile, respectively. Any rotation in the axial direction is therefore not possible.

According to a further preferred embodiment, the conducting tile has at least one outer web for improving electrical connection to the connecting tube. The at least one outer web provides better electrical contact with the inner wall of the connecting tube.

In a further preferred embodiment, each of the conducting tile and the insulating tile has at least one chamfer for ease of mounting.

In a further preferred embodiment, the connecting tube has at least one hole into which a self-tapping screw is screwed. The at least one hole does not have to be provided with an inner thread. This allows an easier and cheaper provision of the connecting tube. The at least one hole may be arranged close to the end(s) of the connecting tube. The at least one hole may be arranged in a given distance away from the end(s) of the connecting tube. The screws serve both mechanical and electrical purposes as will be apparent from the description below.

In particular, the screws of two opposing connecting tubes arranged in a horizontal plane may provide electrical contact to respective connectors of a consumer, such as a light source, where the longitudinal axis of each of the screws extend in horizontal direction. According to this embodiment, the electrical consumer is arranged in a horizontal direction between two connecting tubes.

Alternatively or additionally, the screws of two opposing connecting tubes arranged in a vertical plane hold a magnet for fastening a vertical plate, where the longitudinal axis of each of the screws extend in vertical direction. Fastening of the vertical plate, which serves decorative purposes, is solely made by means of the magnet(s) that are hold by screw heads.

According to a further preferred embodiment, at least one of a plurality of base tubes and at least one of a plurality of connecting tubes which are arranged in a first vertical plane is connected to a first electric polarity and at least one of a plurality of other base tubes and at least one of a plurality of other connecting tubes which are arranged in a second vertical plane being parallel to the first plane is connected to a second electric polarity. Thus, an electric consumer can be connected in any position of the structure to a tube in the first vertical plane and a tube in the second vertical plane and receive power without the necessity of using cables.

According to a further embodiment, the connecting elements which are attached to the base tubes arranged in the first vertical plane and oriented perpendicular to the first vertical plane towards the base tubes of the second vertical plane comprise the insulating tiles. Thus, a voltage gradient is provided between those tubes which are arranged in the first vertical plane and the other tubes which are arranged in the second vertical plane.

The invention will be described mor detailed in the following by reference to the accompanying figures.
- Fig.1: shows an exemplary embodiment of a load-bearing metal in form of a furniture structure in an assembled condition and in an exploded view.
- Fig. 2: shows an enlarged view of the connection of a base tube and a plurality of connecting tubes in an assembled condition and in an exploded view.
- Fig. 3: shows an exploded view a connecting element.
- Fig. 4: shows a details of the base tube and the connecting tube.
- Fig. 5: shows the connecting tube in an enlarged view.
- Fig. 6: shows an insert arranged in the connecting tube for frictional connection with the connecting element.
- Fig. 7: shows an exploded view of the connection of the base tube with two connecting tubes.
- Fig. 8: shows a top view of a shelf plane illustrating different electric polarities put on different assigned connecting tubes.
- Fig. 9: shows a perspective view of a positioning element and an exploded view in conjunction with clamping nuts.
- Fig. 10: shows a transparent, perspective view of a conducting pin having the shape of a frustum of a cone.
- Fig. 11: shows a front and rear perspective view of a conducting tile.
- Fig. 12: shows a front and rear perspective view of an insulating tile.
- Fig. 13: shows a transparent, perspective view of an insert.
- Fig. 14: shows a perspective view of a clamping screw.
- Fig. 15: shows a bottom view and a side view of a shelf plane having a horizontal shelf and two LED strips connected to two opposing connecting tubes having different polarity.
- Fig. 16: shows two different side views of a side section having a vertical plate mounted by magnet force to two overlying connecting tubes.

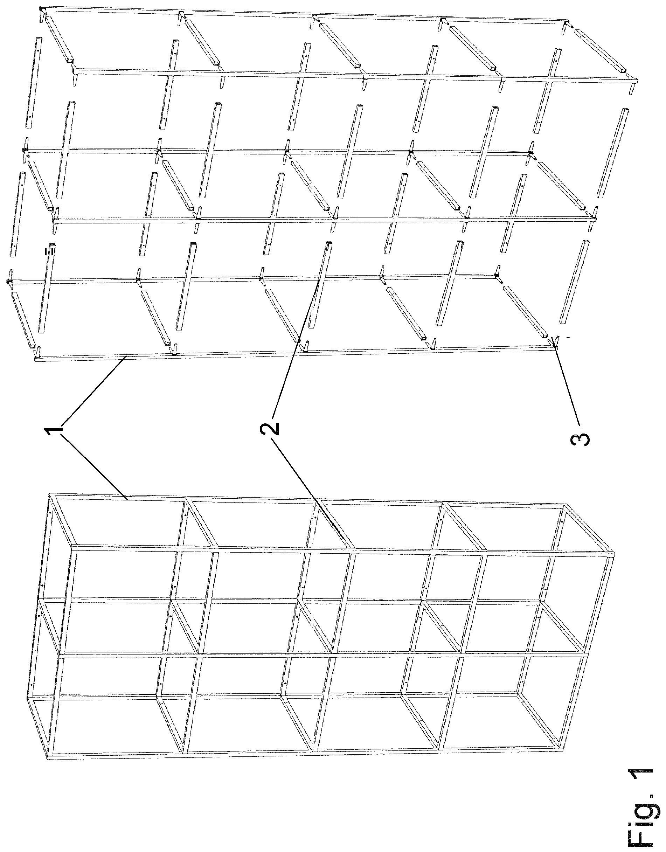

Fig. 1 shows an exemplary embodiment of a load-bearing metal structure in form of a furniture structure made from metal intended for use as a shelf system. However, the furniture structure as described in the following may be configured for other purposes as well, such as tables, desks, optional with integrated shelves and so on. Generally, the furniture structure may extend in an arbitrary manner in all three directions in space. Fig. 1, left side, shows the structure in an assembled condition. Fig. 1, right side, shows the structure in an exploded view. The structure comprises hollow base tubes 1 made of metal extending in a vertical direction, hollow connecting tubes 2 made of metal and extending in a horizontal directions at right angles to one another. The base tubes 1 may also be referred to as longitudinal tubes.

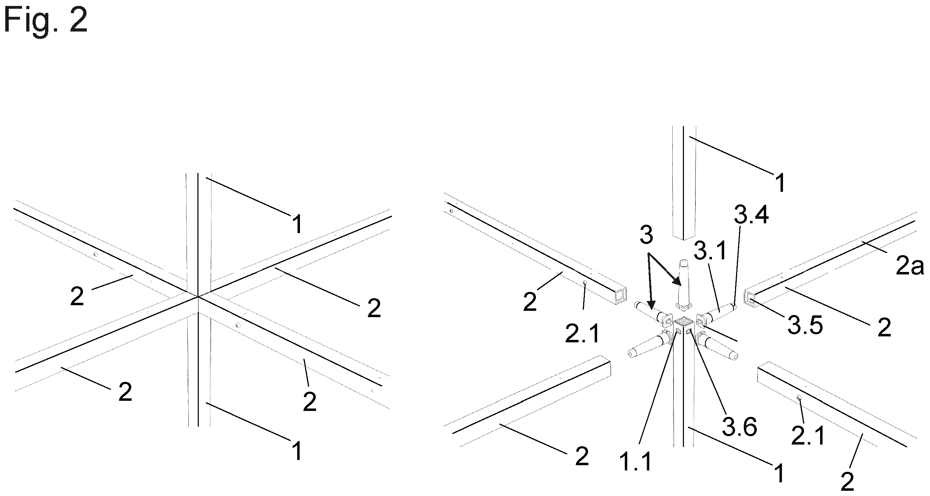

From the exploded views on the right side of Figs. 1 and 2, it is apparent that connecting elements 3 connect the base tubes 1 and the connecting tubes 2, thereby forming a grid-like metal structure. As can be seen from the left sides of Fig. 1 and 2, the connecting elements 3 are not visible when the tubes 1, 2 are assembled with each other. The connecting elements 3 extend in horizontal directions perpendicular to the longitudinal axis of the base tube(s) 1. The connecting elements 3 located adjacent to each other are oriented at an angle of 90 degrees, such that the base tubes 1 and the connecting tubes 2 extend in three directions at right angles to one another.

In the exemplary embodiment of Fig. 1 the metal structure consists of five horizontal shelf planes in which the connecting tubes 2 are arranged. The connecting elements 3 are therefore arranged at both ends of all base tubes 1 as well as in a given regular distance to the ends of the base tubes 1.

Fig. 2 shows an enlarged view of the connection of two base tubes 1 and four connecting tubes 2 arranged in one horizontal plane perpendicular to the longitudinal axis of the base tubes 1. The left side of Fig. 2 shows the structure in an assembled condition, while the right side of Fig. 2 shows it in an exploded view. As can be seen from the exploded view, the base tubes 1 and the connecting tubes 2 consist of hollow metal tubes. In this embodiment, the shape of the metal tubes 1, 2 is square. However, the shape may also be rectangular or rounded.

In this example, five connecting elements 3.1 are arranged at the upper end of the lower base tube 1. They extend in all three space directions at right angles to one another. The connection element 3 extending in the vertical direction connects the upper base tube 1 and four connection elements 3 extending in the horizontal direction connect the horizontally extending connecting tubes 2.

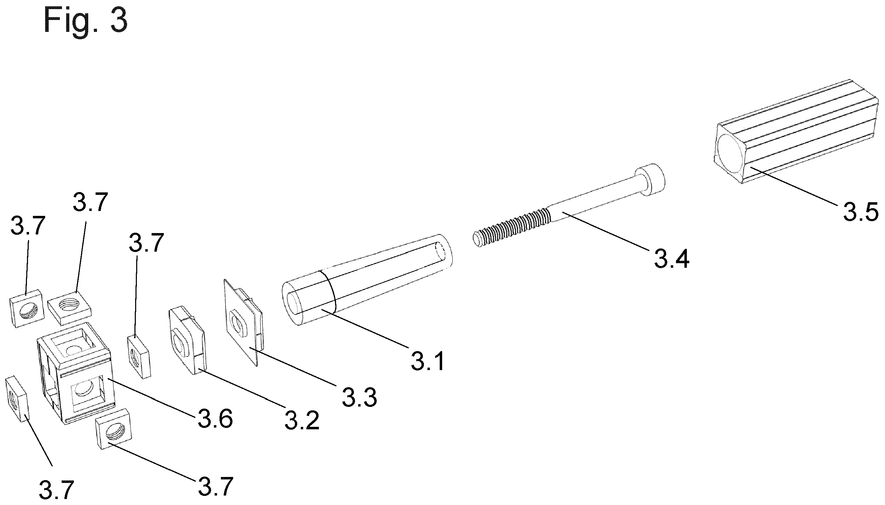

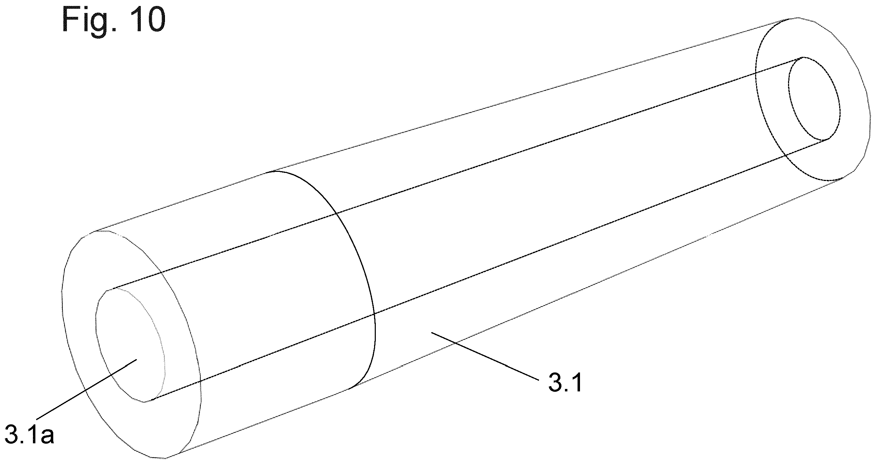

Each connecting element 3 comprises a pin 3.1 having the shape of a frustum of a cone (see also Figs. 3 and 10). The base of the pin 3.1 is attached to the lower base tube 1. The top of each pin 3.1 is inserted into the hollow connecting tubes 2 and the hollow upper base tube 1, thereby forming a frictional joint to the connecting tubes 1 and 2, where the force required to disassemble the joint is much greater than the force required to assemble the elements. Assembling can be done without any tools, only by hand pressure. Disassembly can be done by a strong impact, for example with a rubber hammer, in an opposite direction of the assembling direction.

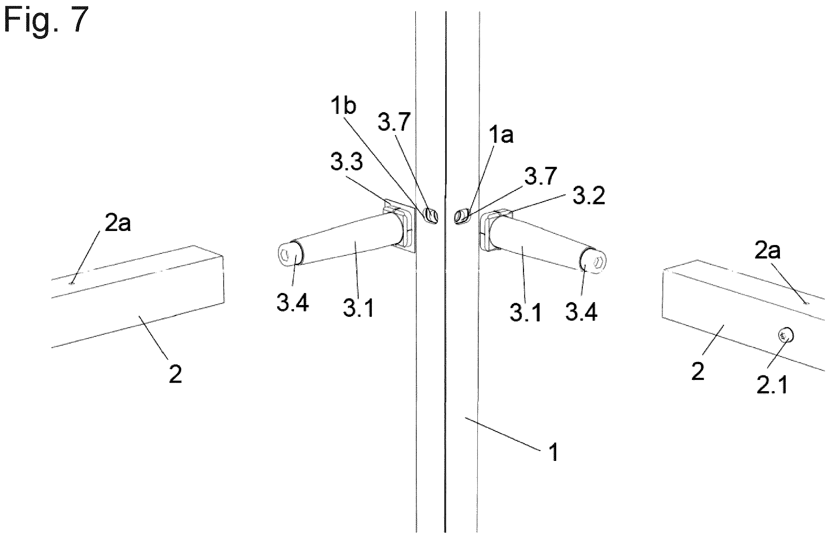

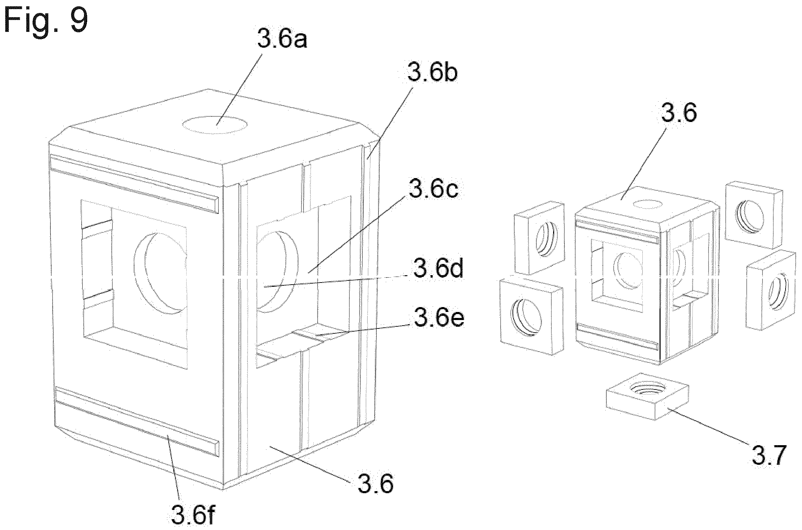

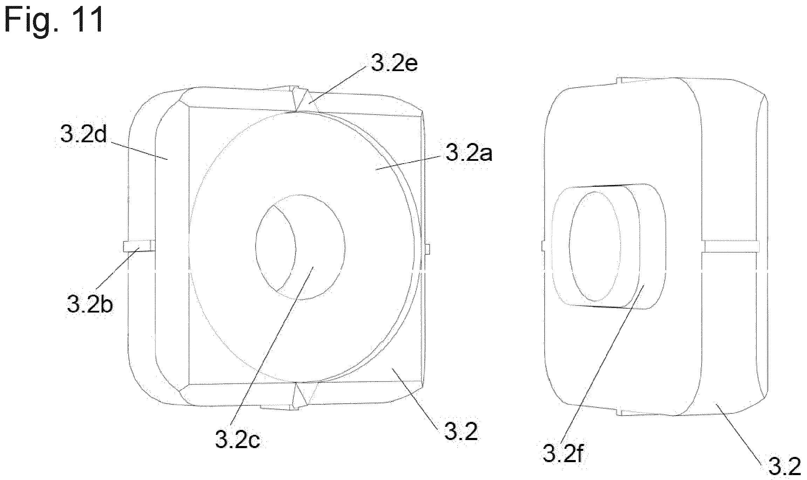

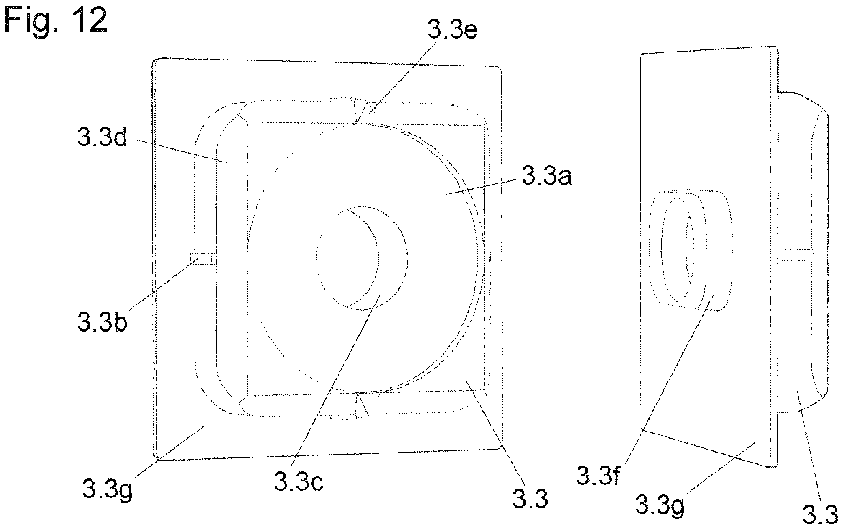

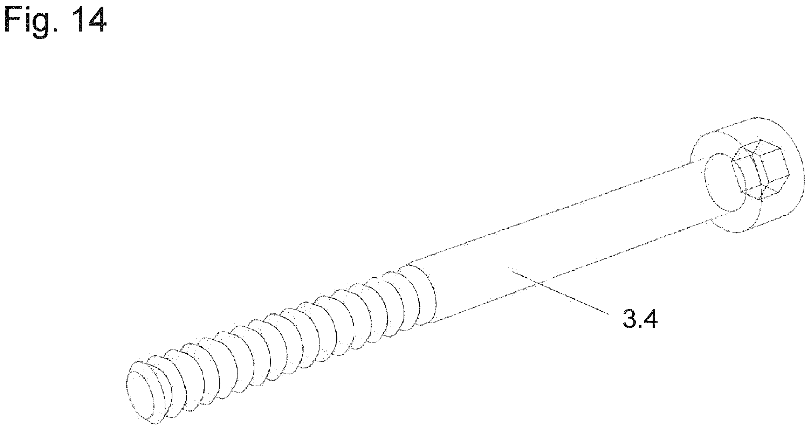

Fig. 3 illustrates an exploded view of any of the connection elements 3 as shown in Figs. 1 and 2. The connecting element 3 comprises the already mentioned pin 3.1 having the shape of the frustum of a cone, one of a conducting tile 3.2 made of metal or an insulating tile 3.3made of plastic, a clamping screw 3.4 (see also Fig. 14) which is put through respective through holes 3.1a of the pin 3.1, 3.2c of the conducting tile or 3.3c of the insulating tile 3.3 (see Figs. 11 and 12), a positioning element 3.6 for positioning of a clamping nut 3.7 (see also Fig. 9). The pin 3.1 is tightly clamped to the base tube 1 by the clamping screw 3.4 protruding through a hole 1.1 in the base tube having an elongated shape (see Fig. 2), and the clamping nut 3.7 which resides inside the base tube (see also Fig. 7). More specifically, the clamping nut 3.7 is arranged in an assigned recess 3.6c (Fig. 9) of the positioning element 3.6 which is located inside the base tube 1 in the area behind the hole 1.1. The clamping screw 3.4 thereby clamps the pin 3.1 and one of the conducting tile 3.2 or insulating tile 3.3 to the base tube 1.

The shape of the conducting tile 3.2 can be better seen from Fig. 11 in a front and rear perspective view. The conducting tile 3.2 has a front side oriented toward the pin 3.1 and an opposite back side which is oriented to the outer wall of the base tube 1. The front side has a circular recess 3.2a whose diameter corresponds to the base of the pin 3.1. The recess 3.2a serves to center the pin 3.1 such that its through hole 3.1a aligns with a through hole 3.2c of the conducting tile 3.2. The outer edges of the conducting tile 3.2 fit firmly to the inner wall of the connecting tube 2 in order to have a good electrical connection to the connecting tube 2. To further improve the electrical contact to the connecting tube 2 outer webs 3.2b are provided on each of the four edges. The conducting tile 3.2 has a chamfer 3.2d making assembly with the connecting tube 2 easier. A protrusion 3.2f is arranged on the back side of the conducting tile 3.2. The protrusion 3.2f on the conducting tile 3.2 enters the through hole 1.1 of the base tube 1. The protrusion 3.2f is a longitudinal protrusion having parallel sides and a through hole 3.2c such that the clamping screw 3.4 can pass through it. As the protrusion 3.2f on the conducting tile 3.2 enters the corresponding hole 1.1 on the base tube 1 rotation of the conducting tile 3.2 can be prevented during and after having finished the screw connection.

The construction of the insulating tile 3.3 is similar to the conducting tile with the difference that an additional wall 3.3g is provided. The insulating tile 3.3 is illustrated in Fig. 12 in a front and rear perspective view. The wall 3.3g at the back side of the insulating tile 3.3 prevents the end face of the conducting tube 2 to electrical connect to the base tube 1. Analogously to the conducting tile 3.2, the insulating tile 3.3 has the recess 3.3a for centering the base of the pin 3.1, the through hole 3.3c being in alignment with a through hole 3.1a of the pin 3.1 as well as the outer webs 3.3b on the four edges. Also, the insulating tile 3.3 has the chamfer 3.3d for easier assembly of the connecting tube 2.

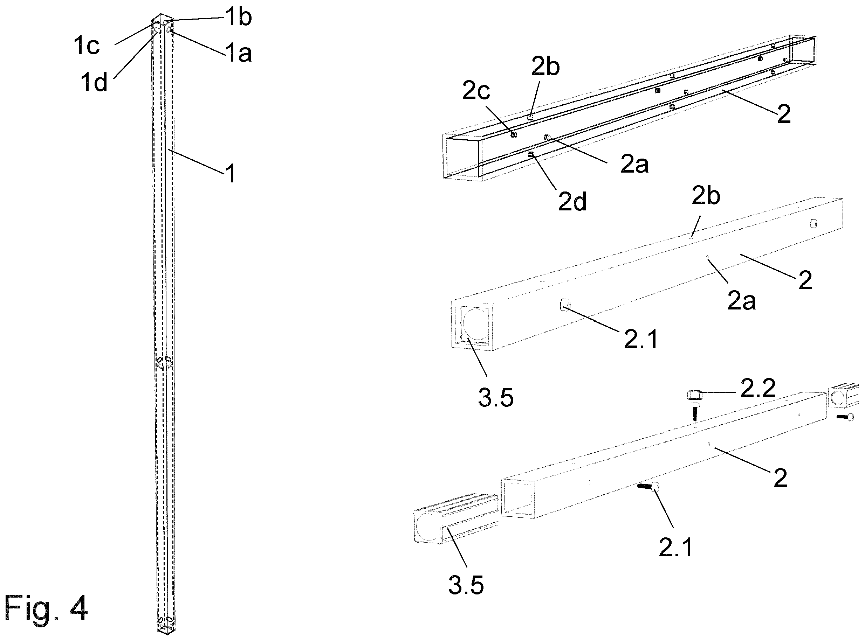

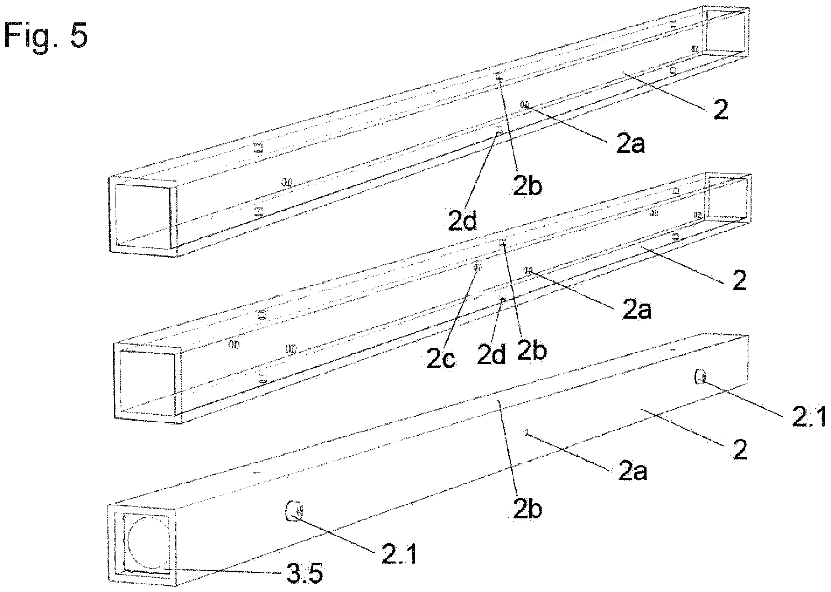

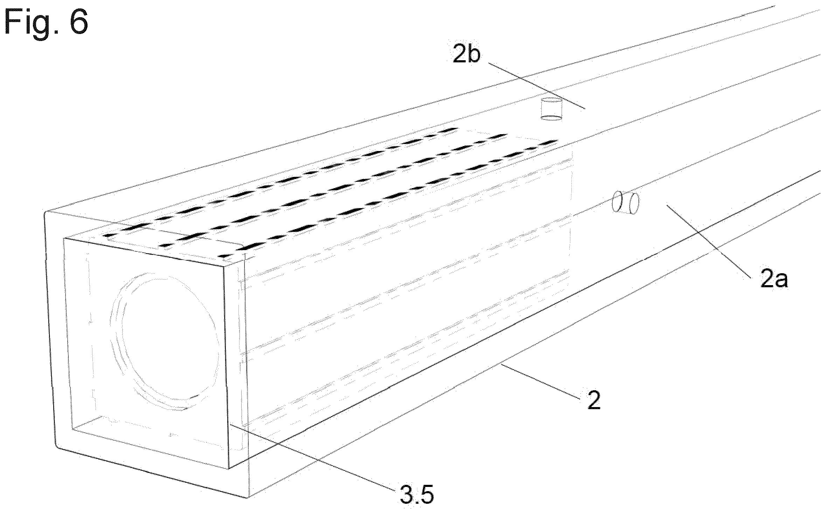

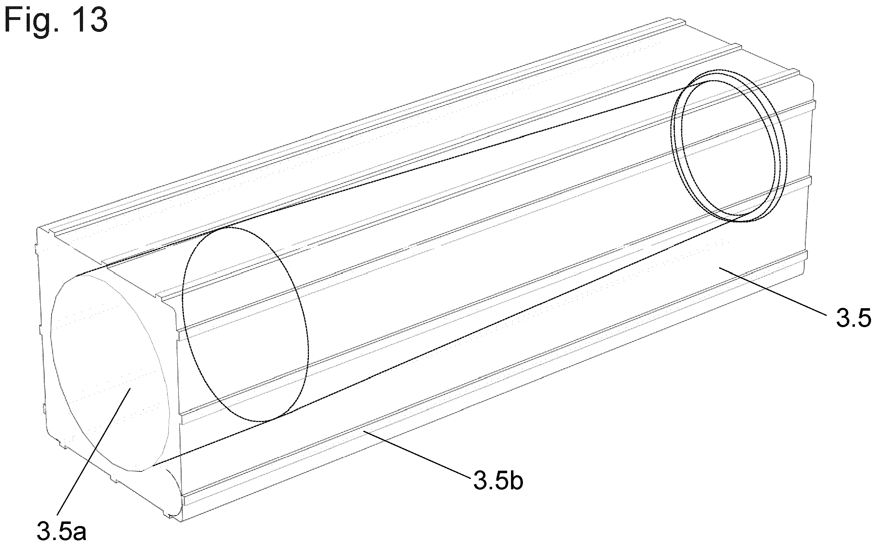

As already mentioned, the connecting element 3 and its pin 3.1 in the shape of a frustum of a cone is inserted into the hollow connecting tube 2 to form a frictional joint to the connecting tube 2. To do so, an insert 3.5 made of insulating material, such as hard plastic, is firmly fixed inside the connecting tube 2 (see Figs 3 to 6 and 13). The insert 3.5 has an opening 3.5a that corresponds to the shape of the pin 3.1. This can be seen from Figs. 10 and 13. Thus, the metal pin 3.1 fits firmly in the opening 3.5a of the plastic insert 3.5. Due to the friction between the surface of the metal pin 3.1 and the plastic insert 3.5, great force is required for disassembly. Fig. 4 shows inserts 3.5 inserted in the connecting tube 2 at the opposite ends of the connecting tube 2.

Fig. 4, left side furthermore illustrates that four elongated holes 1a, 1b, 1c, 1d can be provided on each side of the base tube 1 for allowing the attachment of a respective connecting element 3.

Fig. 7 shows a further exploded view of the connection of the base tube 1 with two connection elements 3 and corresponding connecting tubes 2. In this illustration, the elongated holes 1a, 1b in which the protrusions of the conducting tile 3.2 (right connecting element 3) and insulating tile 3.3 (left connecting element 3) are provided. The clamping screws 3.4 are already inserted in the through holes of the pins 3.1 and the tiles 3.2 and 3.3, respectively. The positioning element 3.1 holding the clamping nut 3.7 is located in the area behind the holes 1a, 1b.

The shape of the recess 3.6c of the positioning element 3.6 corresponds to the shape of the clamping nuts 3.7. As can be seen from Fig. 9, the positioning element 3.6 may have up to five recesses 3.6c for receiving a corresponding clamping nut 3.7. The rectangular shape of the recess 3.6c in the corresponding shape of the clamping 3.7 prevents rotating of the clamping nut(s) 3.7 during the screwing process. Some of the edges of the recess 3.6c do have webs 3.6e for easier placing the clamping nut 3.7 in the corresponding recess 3.6c. On the outer sides of the positioning element 3.6 outer webs 3.6b can be provided in order to make it easier to insert the positioning element 3.6 inside the hollow base tube 1. Furthermore, at the bottom of the respective recess 3.6c an opening 3.6d is provided. The opening may receive a portion of the clamping screw 3.4 if necessary due to lengths variations of the components.

Fig. 10 shows a transparent perspective view of the already described pin having the form of a frustum of a cone. In the present example, a portion at the base of the cone may have a cylindrical form. However, this is not mandatory.

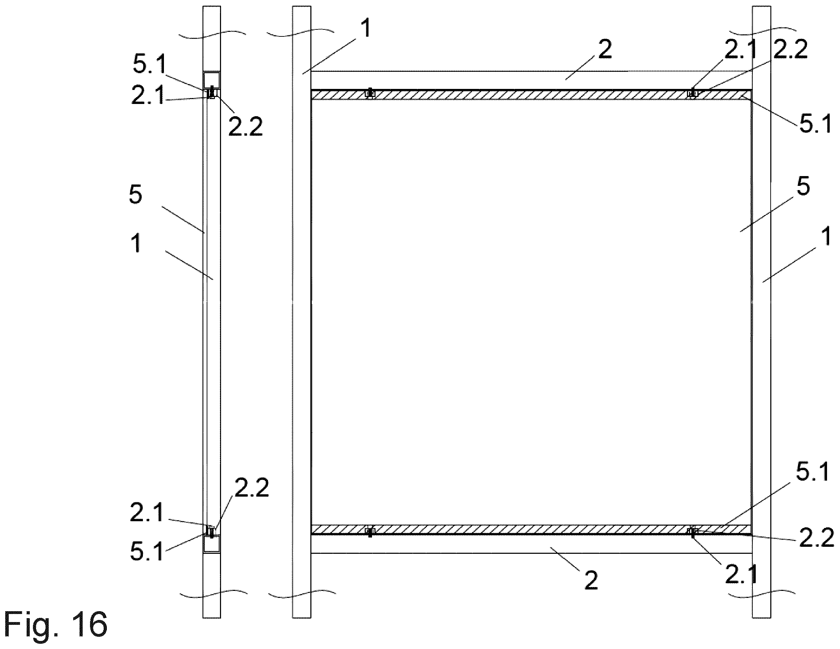

Each of the connecting tubes 2 has holes 2a, 2b, 2c and 2d into which self-tapping screws 2.1 are screwed. This can be seen, for example from Figs. 2, 4, 5, 7, 8, 15, and 16. There are screws 2.1 that extend in a vertical direction when screwed in the holes of opposing connecting tubes 2 lying in a vertical plane (see Fig. 16). These screws are referred to "vertical screws". The screw heads of the opposing vertical screws 2.1 face to each other. The vertical screws 2.1 hold a ring magnet 2.2 on their screw head. The magnet 2.2 serve to fix a vertical plate 5. The vertical plate 5 which may be made from any material has an iron strip 5.1 attached from inside which adheres to the ring magnets 2.2 and fastens the vertical plate. By means of the magnetic connection, the vertical plate 5 becomes replaceable. The vertical plate 5 may serve decorative purposes.

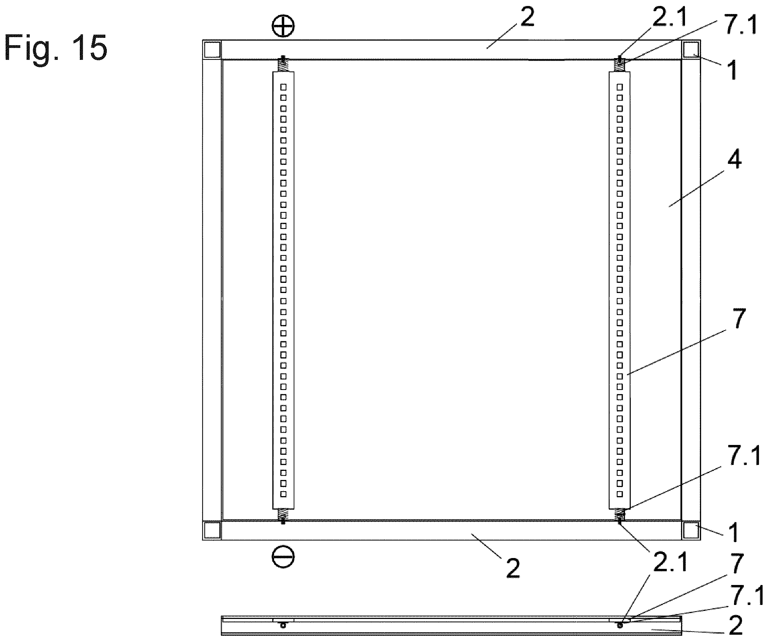

There are other screws 2.1 that extend in a horizontal direction when screwed in the holes of opposing connecting tubes 2 and lie in a horizontal plane. These screws are referred to "horizontal screws". This can be seen from Fig. 15 which shows a bottom view and a side view of a shelf plane. The screw heads of the opposing screws 2.1 face to each other. These screws 2.1 serve both a mechanical function and an electrical function.

In terms of the mechanical function, a horizontal shelf 4 can be placed on the protruding heads of the horizontal screws 2.1, such that the shelf is supported by them. This can be seen best from the lower part of Fig. 15. In addition, the horizontal screws 2.1 and their screw heads, respectively, serve as electrical contacts for an electrical consumer, such as a lighting 7. In order to provide a potential gradient, one of the connecting tubes 2 and thus the screws 2.1 attached to it (Fig. 15 above) is connected to a first polarity (+) and the other opposing of the connecting tubes 2 and thus the screws attached to it (Fig. 15 below) is connected to a second polarity (-).

The lighting 7 comprises strip connectors 7.1 at its opposing ends that are connected to the opposing screws 2.1 of the connecting tubes 2 having different polarities. The strip connector 7.1 lays on these screws 2.1 and makes electrical contact to them. The lighting 7 can be placed below the shelf 4. On one side, the lighting 7 receives a positive (+) voltage and on the other side a negative (-) voltage to light up. In this way, it is not necessary to use cable for lighting elements.

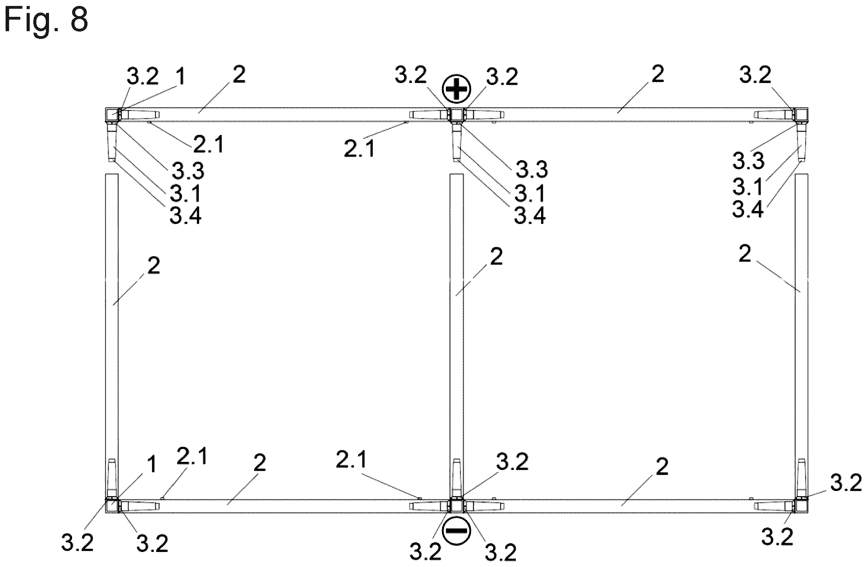

Fig. 8 shows a top view of a shelf plane illustrating the provision of different electric polarities put on opposing connecting tubes using conducting tiles 3.2 and insulating tiles 3.3. The conducting tiles 3.2 are provided at all connecting elements 3 in the lower part of the shelf plane, i.e. at least in the two directions of the illustrated horizontal plane. Thus, the lower base tubes 1 and the connecting tubes 2 connecting the lower base tubes 1 lying in a first vertical plane are provided with negative (-) voltage. In the present example, the connecting tubes 2 extending towards the upper connecting tubes 2 are provided with negative (-) voltage, too.

Furthermore, the conducting tiles 3.2 are provided at all connecting elements 3 in the upper part of the shelf plane which are arranged in a second vertical plane being parallel to the first vertical plane. Thus, the upper base tubes 1 and the connecting tubes 2 connecting the upper base tubes 1 lying in the second vertical plane are provided with positive (+) voltage.

The insulating tiles 3.3 are provided at all connecting elements 3 in the upper part of the shelf plane that extend towards the lower base tubes 1.

Thus, the base tubes 1 and connecting tubes 2 of the first plane are connected to the negative potential (-) while the base tubes 1 and connecting tubes 2 arranged in the second plane are connected to the opposite polarity (+). As a result, when connecting the consumer, such as the lighting 7 between the screws 2.1 on opposing connecting tubes 2 of the first plane and the second plane, a voltage difference is apparent which allows powering a consumer.

It is to be noted that the terms "lower part of the shelf plane" and "upper part of the shelf plane" in the description above refers to the figurative illustration of Fig. 8, but not necessarily to the real orientation of the bearing structure.

It is to be noted that different areas of the bearing structure can be connected to different power sources by appropriate arrangement of the conducting tiles 3.2 and the insulating tiles 3.3.

It is further to be noted that a voltage gradient may be created between shelf planes being arranged in different horizontal planes by appropriate arrangement of the conducting tiles 3.2 and the insulating tiles 3.3.

The furniture structure as described herein represents a load-bearing metal structure and may be configured for shelf systems, tables, desks, optional with integrated shelves and so on. Generally, the furniture structure may extend in an arbitrary manner in all three directions in space. The structure may be regular or not. In the latter, the lengths of the tubes may vary from grid to grid. In case of tables or desks, the metal structure can be covered with plates of various materials arranged in a horizontal plane. These plates may be fixed with screws. They also can be glued to the structure.

### List of reference numerals

- 1: base tube
- 1.1 / 1a, 1b, 1c, 1d: elongated hole
- 2: connecting tube
- 2a, 2b, 2c, 2d: hole
- 2.1: screw
- 2.2: ring magnet
- 3: connecting element
- 3.1: pin having the shape of a frustum of a cone (conducting/metal cone)
- 3.1a: through hole
- 3.2: conducting tile (metal tile)
- 3.2a: recess
- 3.2b: outer web
- 3.2c: through hole
- 3.2d: chamfer
- 3.2e: orientation mark
- 3.2f: protrusion
- 3.3: insulating tile (plastic tile)
- 3.3a: recess
- 3.3b: outer web
- 3.3c: through hole
- 3.3d: chamfer
- 3.3e: orientation mark
- 3.3f: protrusion
- 3.3g: wall
- 3.4: clamping screw
- 3.5: insert
- 3.5a: opening
- 3.5b: outer web
- 3.6: positioning element
- 3.6a: opening
- 3.6b: outer web
- 3.6c: recess
- 3.6d: opening
- 3.6e: inner web
- 3.6f: outer web
- 3.7: clamping nut
- 4: (horizontal) shelf
- 5: (vertical) plate
- 5.1: iron strip
- 7: LED strip
- 7.1: strip connector

## Claims

1. A furniture structure made from metal, comprising:
- hollow base tubes (1) made from metal;
- hollow connecting tubes (2) made from metal; and
- connecting elements (3) for connecting the base tubes (1) and the connecting tubes (2) thereby forming a grid-like metal structure;
- wherein at least one connecting element (3) comprises a pin (3.1) having the shape of a frustum of a cone, the base of which is attached to the base tube (1) and the top of which is inserted into the hollow connecting tube (2) to form a frictional joint to the connecting tube (2), where the force required to disassemble the joint is much greater than the force required to assemble the elements;
- wherein the pin (3.1) is tightly clamped to the base tube (1) by a clamping screw (3.4),
**characterized in that**
the clamping screw (3.4) protrudes through a hole (1.1) in the base tube (1), and a clamping nut (3.7) inside the base tube (1).

2. The furniture structure according to claim 1, wherein the pin (3.1) is joined to an insert (3.5) made from an electric insulating material and having an opening (3.5a) that corresponds to the shape of the pin (3.1), where the insert (3.5) is firmly fixed inside the hollow connecting tube (2).

3. The furniture structure according to claim 1 or 2, wherein the clamping nut (3.7) is held in a recess of a position element (3.6) located inside the base tube (1) in an area behind the hole (1.1).

4. The furniture structure according to one of the preceding claims, wherein one of a conducting tile (3.2) or an insulating tile (3.3) is arranged between the base of the pin (3.1) and the base tube (1), where the outer edges of the conducting tile (3.2) and the insulating tile (3.3) fit firmly to the inner wall of the connecting tube (2) in order to provide or prevent an electrical connection between the base tube (1) and the connecting tube (2).

5. The furniture structure according to claim 4, wherein the insulating tile (3.3) has a wall (3.3g) extending parallel to the longitudinal axis of the base tube (1) and being arranged between the base tube (1) and an end face of the connecting tube (2).

6. The furniture structure according to claim 4 or 5, wherein each of the conducting tile (3.2) and the insulating tile (3.3) has a circular recess (3.2a, 3.3a) for centering the base of the pin (3.1).

7. The furniture structure according to one of claims 4 to 6, wherein each of the conducting tile (3.2) and the insulating tile (3.3) has a protrusion (3.2f, 3.3f) with parallel sides and a through hole for the clamping screw (3.4), where the shape of the protrusion (3.2f, 3.3f) corresponds to the hole (1.1) of the base tube (1.1), where the protrusion (3.2f, 3.3f) protrudes in the hole (1.1) of the base tube (1) when the pin (3.1) is clamped to the base tube (1) by the clamping screw (3.4).

8. The furniture structure according to one of claims 4 to 7, wherein the conducting tile (3.2) has at least one outer web (3.2b) for improving electrical connection to the connecting tube (2).

9. The furniture structure according to one of claims 4 to 8, wherein each of the conducting tile (3.2) and the insulating tile (3.3) has at least one chamfer (3.2.d, 3.3.d) for ease of mounting.

10. The furniture structure according to one of the preceding claims, wherein the connecting tube (2) has at least one hole (2a, 2b, 2c, 2d) into which a self-tapping screw (2.1) is screwed.

11. The furniture structure according to claim 10, wherein the screws (2.1) of two opposing connecting tubes (2) arranged in a horizontal plane provide electrical contact to respective connectors (7.1) of a electrical consumer, where the longitudinal axes of each of the screws (2.1) extend in horizontal direction.

12. The furniture structure according to claim 10 or 11, wherein the screws (2.1) of two opposing connecting tubes (2) arranged in a vertical plane hold a magnet (2.2) for fastening a vertical plate (5), where the longitudinal axes of each of the screws (2.1) extend in vertical direction.

13. The furniture structure according to one of the preceding claims, wherein at least one of a plurality of base tubes (1) and at least one of a plurality of connecting tubes (2) which are arranged in a first vertical plane is connected to a first electric polarity and at least one of a plurality of base tubes (1) and at least one of a plurality of connecting tubes (2) which are arranged in a second vertical plane being parallel to the first vertical plane is connected to a second electric polarity.

14. The furniture structure according to claim 13 when depending on any of claims 4 to 9, wherein the connecting elements (3) which are attached to the base tubes (1) arranged in the first vertical plane and oriented perpendicular to the first vertical plane towards the base tubes (1) of the second vertical plane comprise the insulating tiles (3.3).

## Patentansprüche

1. Möbelstruktur aus Metall, umfassend:
- hohle Basisrohre (1) aus Metall;
- hohle Verbindungsrohre (2) aus Metall; und
- Verbindungselemente (3) zum Verbinden der Basisrohre (1) und der Verbindungsrohre (2), wodurch eine gitterartige Metallstruktur gebildet wird;
- wobei mindestens ein Verbindungselement (3) einen Stift (3.1) in Form eines Kegelstumpfs umfasst, dessen Basis an dem Basisrohr (1) befestigt ist und dessen Spitze in das hohle Verbindungsrohr (2) eingeführt ist, um eine Reibungsverbindung mit dem Verbindungsrohr (2) zu bilden, wobei die zum Zerlegen der Verbindung erforderliche Kraft wesentlich größer ist als die zum Zusammenbauen der Elemente erforderliche Kraft;
- wobei der Stift (3.1) durch eine Klemmschraube (3.4) fest an das Basisrohr (1) geklemmt ist,
**dadurch gekennzeichnet, dass**
die Klemmschraube (3.4) durch eine Bohrung (1.1) im Basisrohr (1) und eine Klemmmutter (3.7) im Inneren des Basisrohrs (1) ragt.

2. Möbelstruktur nach Anspruch 1, wobei der Stift (3.1) mit einem Einsatz (3.5) aus einem elektrisch isolierenden Material verbunden ist, der eine der Form des Stifts (3.1) entsprechende Öffnung (3.5a) aufweist, wobei der Einsatz (3.5) fest im Inneren des hohlen Verbindungsrohrs (2) befestigt ist.

3. Möbelstruktur nach Anspruch 1 oder 2, wobei die Klemmmutter (3.7) in einer Aussparung eines Positionierungselements (3.6) gehalten wird, das sich innerhalb des Basisrohrs (1) in einem Bereich hinter der Bohrung (1.1) befindet.

4. Möbelstruktur nach einem der vorhergehenden Ansprüche, wobei entweder eine leitende Fliese (3.2) oder eine isolierende Fliese (3.3) zwischen der Basis des Stifts (3.1) und dem Basisrohr (1) angeordnet ist, wobei die Außenkanten der leitenden Fliese (3.2) und der isolierenden Fliese (3.3) fest an der Innenwand des Verbindungsrohrs (2) anliegen, um eine elektrische Verbindung zwischen dem Basisrohr (1) und dem Verbindungsrohr (2) herzustellen oder zu verhindern.

5. Möbelstruktur nach Anspruch 4, wobei die isolierende Fliese (3.3) eine Wand (3.3g) aufweist, die sich parallel zur Längsachse des Basisrohrs (1) erstreckt und zwischen dem Basisrohr (1) und einer Stirnfläche des Verbindungsrohrs (2) angeordnet ist.

6. Möbelstruktur nach Anspruch 4 oder 5, wobei sowohl die leitende Fliese (3.2) als auch die isolierende Fliese (3.3) eine kreisförmige Aussparung (3.2a, 3.3a) zum Zentrieren der Basis des Stifts (3.1) aufweisen.

7. Möbelstruktur nach einem der Ansprüche 4 bis 6, wobei die leitende Fliese (3.2) und die isolierende Fliese (3.3) jeweils einen Vorsprung (3.2f, 3.3f) mit parallelen Seiten und eine Durchgangsbohrung für die Klemmschraube (3.4) aufweisen, wobei die Form des Vorsprungs (3.2f, 3.3f) der Bohrung (1.1) des Basisrohrs (1) entspricht, wobei der Vorsprung (3.2f, 3.3f) in die Bohrung (1.1) des Basisrohrs (1) hineinragt, wenn der Stift (3.1) durch die Klemmschraube (3.4) am Basisrohr (1) festgeklemmt ist.

8. Möbelstruktur nach einem der Ansprüche 4 bis 7, wobei die leitende Fliese (3.2) mindestens einen äußeren Steg (3.2b) zur Verbesserung der elektrischen Verbindung mit dem Verbindungsrohr (2) aufweist.

9. Möbelstruktur nach einem der Ansprüche 4 bis 8, wobei sowohl die leitende Fliese (3.2) als auch die isolierende Fliese (3.3) zur Erleichterung der Montage jeweils mindestens eine Fase (3.2.d, 3.3.d) aufweisen.

10. Möbelstruktur nach einem der vorhergehenden Ansprüche, wobei das Verbindungsrohr (2) mindestens eine Bohrung (2a, 2b, 2c, 2d) aufweist, in die eine selbstschneidende Schraube (2.1) eingeschraubt ist.

11. Möbelstruktur nach Anspruch 10, wobei die Schrauben (2.1) zweier gegenüberliegender, in einer horizontalen Ebene angeordneter Verbindungsrohre (2) einen elektrischen Kontakt zu jeweiligen Anschlüssen (7.1) eines elektrischen Verbrauchers herstellen, wobei sich die Längsachsen jeder der Schrauben (2.1) in horizontaler Richtung erstrecken.

12. Möbelstruktur nach Anspruch 10 oder 11, wobei die Schrauben (2.1) zweier gegenüberliegender, in einer vertikalen Ebene angeordneter Verbindungsrohre (2) einen Magneten (2.2) zur Befestigung einer vertikalen Platte (5) halten, wobei sich die Längsachsen der einzelnen Schrauben (2.1) in vertikaler Richtung erstrecken.

13. Möbelstruktur nach einem der vorhergehenden Ansprüche, wobei mindestens eines einer Vielzahl von Basisrohren (1) und mindestens eines einer Vielzahl von Verbindungsrohren (2), die in einer ersten vertikalen Ebene angeordnet sind, mit einer ersten elektrischen Polarität verbunden ist und mindestens eines einer Vielzahl von Basisrohren (1) und mindestens eines einer Vielzahl von Verbindungsrohren (2), die in einer zweiten vertikalen Ebene parallel zur ersten vertikalen Ebene angeordnet sind, mit einer zweiten elektrischen Polarität verbunden ist.

14. Möbelstruktur nach Anspruch 13, in Abhängigkeit von den Ansprüchen 4 bis 9, wobei die Verbindungselemente (3), die an den in der ersten vertikalen Ebene angeordneten und senkrecht zu dieser Ebene in Richtung der Basisrohre (1) der zweiten vertikalen Ebene ausgerichteten Basisrohren (1) befestigt sind, die isolierenden Fliesen (3.3) umfassen.

## Revendications

1. Structure de meuble en métal, comprenant :
- des tubes de base creux (1) en métal ;
- des tubes de raccordement creux (2) en métal ; et
- des éléments de raccordement (3) pour raccorder les tubes de base (1) et les tubes de raccordement (2), formant ainsi une structure métallique en treillis ;
- où au moins un élément de raccordement (3) comprend une tige (3.1) ayant la forme d'un tronc de cône, dont la base est fixée au tube de base (1) et dont le sommet est inséré dans le tube de raccordement creux (2) pour former une liaison par friction avec le tube de raccordement (2), la force nécessaire pour démonter la liaison étant bien supérieure à la force nécessaire pour assembler les éléments ;
- où la tige (3.1) est fermement serrée contre le tube de base (1) par une vis de serrage (3.4),
**caractérisée en ce que**
la vis de serrage (3.4) dépasse à travers un trou (1.1) dans le tube de base (1) et un écrou de serrage (3.7) à l'intérieur du tube de base (1).

2. Structure de meuble selon la revendication 1, où la tige (3.1) est reliée à un insert (3.5) réalisé dans un matériau électriquement isolant et présentant une ouverture (3.5a) qui correspond à la forme de la tige (3.1), l'insert (3.5) étant solidement fixé à l'intérieur du tube de raccordement creux (2).

3. Structure de meuble selon la revendication 1 ou 2, où l'écrou de serrage (3.7) est maintenu dans un évidement d'un élément de positionnement (3.6) situé à l'intérieur du tube de base (1), dans une zone située derrière le trou (1.1).

4. Structure de meuble selon l'une des revendications précédentes, où un carreau parmi un carreau conducteur (3.2) ou un carreau isolant (3.3) est agencé entre la base de la tige (3.1) et le tube de base (1), les bords extérieurs du carreau conducteur (3.2) et du carreau isolant (3.3) s'ajustant fermement contre la paroi intérieure du tube de raccordement (2) afin d'établir ou d'empêcher une connexion électrique entre le tube de base (1) et le tube de raccordement (2).

5. Structure de meuble selon la revendication 4, où le carreau isolant (3.3) présente une paroi (3.3g) s'étendant parallèlement à l'axe longitudinal du tube de base (1) et étant agencée entre le tube de base (1) et une face d'extrémité du tube de raccordement (2).

6. Structure de meuble selon la revendication 4 ou 5, où le carreau conducteur (3.2) et le carreau isolant (3.3) présentent chacun un évidement circulaire (3.2a, 3.3a) pour centrer la base de la tige (3.1).

7. Structure de meuble selon l'une des revendications 4 à 6, où le carreau conducteur (3.2) et le carreau isolant (3.3) présentent chacun une saillie (3.2f, 3.3f) avec des côtés parallèles et un trou traversant pour la vis de serrage (3.4), la forme de la saillie (3.2f, 3.3f) correspondant au trou (1.1) du tube de base (1), la saillie (3.2f, 3.3f) faisant saillie dans le trou (1.1) du tube de base (1) lorsque la tige (3.1) est serrée sur le tube de base (1) par la vis de serrage (3.4).

8. Structure de meuble selon l'une des revendications 4 à 7, où le carreau conducteur (3.2) présente au moins une âme extérieure (3.2b) pour améliorer la connexion électrique avec le tube de raccordement (2).

9. Structure de meuble selon l'une des revendications 4 à 8, où le carreau conducteur (3.2) et le carreau isolant (3.3) présentent chacun au moins un chanfrein (3.2.d, 3.3.d) pour faciliter le montage.

10. Structure de meuble selon l'une des revendications précédentes, où le tube de raccordement (2) présente au moins un trou (2a, 2b, 2c, 2d) dans lequel est vissée une vis autotaraudeuse (2.1).

11. Structure de meuble selon la revendication 10, où les vis (2.1) de deux tubes de raccordement (2) opposés agencés dans un plan horizontal assurent un contact électrique avec des connecteurs (7.1) respectifs d'un consommateur électrique, les axes longitudinaux de chacune des vis (2.1) s'étendant dans la direction horizontale.

12. Structure de meuble selon la revendication 10 ou 11, où les vis (2.1) de deux tubes de liaison (2) opposés agencés dans un plan vertical maintiennent un aimant (2.2) pour fixer une plaque verticale (5), les axes longitudinaux de chacune des vis (2.1) s'étendant dans la direction verticale.

13. Structure de meuble selon l'une des revendications précédentes, où au moins l'un d'une pluralité de tubes de base (1) et au moins l'un d'une pluralité de tubes de raccordement (2) qui sont agencés dans un premier plan vertical est connecté à une première polarité électrique, et au moins l'un d'une pluralité de tubes de base (1) et au moins l'un d'une pluralité de tubes de raccordement (2) qui sont agencés dans un deuxième plan vertical parallèle au premier plan vertical est connecté à une deuxième polarité électrique.

14. Structure de meuble selon la revendication 13, lorsqu'elle dépend de l'une quelconque des revendications 4 à 9, où les éléments de raccordement (3) qui sont fixés aux tubes de base (1) agencés dans le premier plan vertical et orientés perpendiculairement au premier plan vertical vers les tubes de base (1) du deuxième plan vertical comprennent les carreaux isolants (3.3).
